(19) Europäisches Patentamt
European Patent Office
Office européen des brevets

(11) **EP 1 636 708 B1**

(12) **EUROPEAN PATENT SPECIFICATION**

(45) Date of publication and mention
of the grant of the patent:
**04.04.2012 Bulletin 2012/14**

(21) Application number: **03731585.0**

(22) Date of filing: **05.06.2003**

(51) Int Cl.:
*G06F 15/16* (2006.01)     *G06F 15/173* (2006.01)
*H04J 3/16* (2006.01)     *H04L 12/28* (2006.01)
*H04L 12/56* (2006.01)

(86) International application number:
**PCT/US2003/017914**

(87) International publication number:
**WO 2004/109534 (16.12.2004 Gazette 2004/51)**

(54) **METHOD AND SYSTEM TO MANAGE A NETWORK CONNECTION APPLICATION**

VERFAHREN UND SYSTEM ZUR VERWALTUNG EINER NETZWERK-
VERBINDUNGSANWENDUNG

PROCEDE ET SYSTEME DE GESTION D'UNE APPLICATION DE CONNEXION DE RESEAU

(84) Designated Contracting States:
**AT BE BG CH CY CZ DE DK EE ES FI FR GB GR HU IE IT LI LU MC NL PT RO SE SI SK TR**

(43) Date of publication of application:
**22.03.2006 Bulletin 2006/12**

(73) Proprietor: **Ipass Inc.**
**Redwood Shores,**
**California 94065 (US)**

(72) Inventors:
• **SUNDER, Singam**
**San Jose, CA 95136 (US)**
• **EDGETT, Jeff Steven**
**Sunnyvale, CA 94086 (US)**

• **ALBERT, Roy David**
**San Jose, CA 95120 (US)**

(74) Representative: **Reitstötter - Kinzebach**
**Patentanwälte**
**Sternwartstrasse 4**
**81679 München (DE)**

(56) References cited:
**WO-A1-00/67435**     **WO-A1-96/07141**
**WO-A2-02/23305**     **WO-A2-99/44339**
**WO-A2-02/096021**     **US-A- 6 144 641**
**US-A1- 2001 034 796**     **US-A1- 2002 029 275**
**US-A1- 2002 114 346**     **US-B2- 6 522 884**

**Description**

## FIELD OF THE INVENTION

The present invention relates to the field of remote network connections and more particularly to a method and system to manage connection of a connection application to one of a plurality of network connection points.

## BACKGROUND OF THE INVENTION

Due to the increasing globalization of economies, the need to provide communications between geographically dispersed persons and facilities has increased. For example, a particular business may have facilities located across multiple countries and continents. A further result of increased globalization has been an increase in business travel. The increasing dependence of corporations and persons on Internet based communications has furthermore made it desirable that mobile workers (so-called "road warriors") be able to access Internet-based and wireless communications as they travel worldwide. Services that facilitate communications to such mobile persons are commonly referred to as "roaming services". Considering Internet-based communications as an example, in order to meet the needs of mobile customers, Internet Service Providers (ISPs) have begun to offer local-call access to the Internet from various locations world wide, such a service being termed a "roaming" Internet access solution. The requirement for a roaming solution arises primarily because ISPs tend to specialize by geographic area, causing gaps in service coverage. The expansion of network infrastructure, network management and continuous upgrades to meet required reliability and performance standards all place tremendous capital and time burdens on ISPs. For these reason, many ISPs only locate Points of Presence (POPs) in a limited geographic area.

For the reasons set out above, the ability for ISPs to offer Internet roaming solutions, especially to business customers, is becoming increasingly important as many businesses utilize Internet-based communications to replace traditional remote access solutions for their telecommuters and mobile work forces. In order to provide Internet roaming solutions, some ISPs have begun to share network infrastructure to gain additional geographic reach.

It is to be appreciated that a provider of roaming access services may wish to manage a connection application used by the user to prioritize network access points that may be used to a local ISP.

US 2001/0034796 Al describes an automatic dialer for determining relative rankings of network access numbers from within a group of available network access numbers and for facilitating selection of a network access number to use for a connection from a client device to a data network. Various factors are considered in determining the rankings of the network access numbers. The factors include connection costs and quality of connection. Furthermore, varying weight may be given to different connection qualities and cost factors.

## SUMMARY OF THE INVENTION

In accordance with the invention, there is provided a method for managing a network connection application, the method including:

assigning a plurality of selection criteria to each connection point, each selection criteria bearing an associated selection weight;
arranging the connection points in a prioritized order in a priority list used by the connection application to connect to any one of the connection points, the prioritized order being based on the selection criteria and associated selection weights; and
making the prioritized list available for use by the connection application
; and diversifying the connection points in the priority list so that connection points from a plurality of service providers are provided to a user.

The method may include associating a weight bias with each selection weight, the weight bias influencing the priority of the connection point. In one embodiment, the selection weights are normalized.
The method may include:

multiplying each weight by its associated bias; and
obtaining the sum of the resultant biased weights to define a preference indicator that determines the order of each connection point in the priority list.

In one embodiment, the selection criteria are selected from the group including the price, network connection performance data, profit margin, service commitment associated with the connection point, a user error, a software error, a hardware error, and a network error. The network connection performance data may include one of connection speed and throughput.

The price criteria may be a price of the particular connection point relative to the price of all connection points in a particular pricing plan. The network connection performance data may include connection quality criteria. In one embodiment, the network connection performance data includes speed criteria defined as a speed of the associated connection point relative to a speed of all connection points.

The profit margin criteria may be defined as a margin available on the associated connection point relative to a margin available on all connection points in a particular pricing plan. The provider commitment may be defined as a percentage of commitment remaining in a period relative to all other commitments in the period. The provider selector weight may be an integer assigned by a roaming access service provider.

In one embodiment, the method includes:

storing the prioritized list in a client file; and
publishing the client file on a web server for downloading by the connection application.

The method may include:

collecting network connection performance data; and
modifying the prioritized order in the priority list based on the network connection performance data.

Still further according to the invention, there is provided a management system to manage a connection application, the system including:

a network interface to interface the management system to a network providing a plurality of network connection points via which a client machine can connect to the network using the connection application; and
a server machine connected to the network, wherein the server machine assigns a plurality of selection criteria to each connection point, each selection criteria bearing an associated selection weight and the connection points are arranged in a prioritized order in a priority list used by the connection application to connect to any one of the connection points, the prioritized order being based on the selection criteria and associated selection weights , wherein the connection points are diversified in the priority list so that connection points from a plurality of service providers are provided to a user.

According to a yet further aspect of the invention, there is provided a management system to manage a connection application, the system including:

a network interface to interface the management system to a network providing a plurality of network connection points via which a client machine can connect to the network using the connection application; and
a server machine connected to the network, wherein the server machine assigns a plurality of selection criteria to each connection point, each selection criteria bearing an associated financial consideration and the connection points are arranged in a prioritized order in a priority list used by the connection application to connect to any one of the connection points, the prioritized order being based on the selection criteria.

The invention extends to a machine-readable medium embodying a sequence of instructions that, when executed by a machine, cause the machine to execute any of the methods described herein.

Other features of the present invention will be apparent from the accompanying drawings and from the detailed description which follows.

## BRIEF DESCRIPTION OF THE DRAWING

The present invention is illustrated by way of example and not limitation in the figures of the accompanying drawings, in which like references indicate similar elements and in which:

**FIGURE 1** is a diagram of a basic client-server system upon which one embodiment of the invention may be implemented;
**FIGURE 2** is a basic diagram illustrating connection to an Internet Service Provider (ISP);
**FIGURE 3** is a schematic diagram of basic system architecture according to one embodiment of the invention;
**FIGURE 4** is a graphic user interface (GUI) generated by a connection application implementing the invention;
**FIGURE 5** is an relationship diagram between a client machine and a plurality of Point-Of-Presence gateways (POPs) according to one embodiment of the invention;

**FIGURE 6** is a schematic representation of connection application management system in accordance with the invention;

**FIGURE 7** is schematic flow diagram of a method of managing the priority of access points of a connection application according to one embodiment of the invention;

**FIGURE 8** is a schematic flow diagram of an SQM process of the management system of FIGURE 6;

**FIGURE 9** is schematic flow diagram of a method, in accordance with one embodiment of the invention, to prioritize access points in a priority list used by the connection application; and

**FIGURE 10** is a schematic representation of a machine for storing a set of instructions for executing any one of the methodologies described herein.

## DETAILED DESCRIPTION

Although the present invention is described below by way of various embodiments that include specific structures and methods, embodiments that include alternative structures and methods may be employed without departing from the principles of the invention described herein.

In general, embodiments described below feature a network-based application that modifies a priority list of network connection points based on selection criteria, for example, price, quality, speed, profit margin, provider commitment, and diversity requirements associated with the access point. The selection criteria may also be related to data collected from the connection application.

Network-related technology

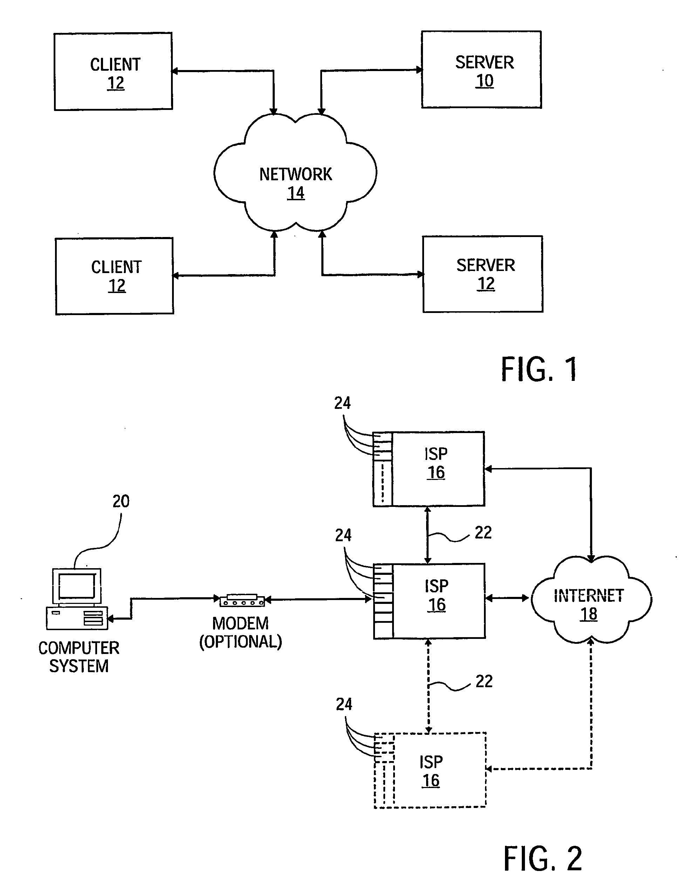

Before describing embodiments of the present invention in detail, some of the concepts on which the present invention is based are discussed. A component of one embodiment of the present invention is a computer server program 10, two of which are shown in Figure 1 by way of illustration. Servers 10 are computer programs that provide some service to other programs, called clients 12, two of which are also shown in Figure 1 by way of illustration. The clients 12 and servers 10 communicate by means of message passing often over a network 14, and use some protocol (a set of formal rules describing how to transmit data), to encode the client's requests and/or responses and the server's responses and/or requests.

Another component of one embodiment the present invention is an Internet Service Provider (ISP) 16 (see Figure 2) that provides access to the Internet 18 via a client machine 20 (typically a personal computer or PC). The client machine 20 includes a connection application (e.g. a dialer, DSL connection, ISDN line, wireless connection or the like) via which a customer can establish a connection and then, for example, log onto the Internet 18 and browse the World Wide Web (WWW) and USENET, send and receive e-mail, and/or access a particular network. In addition to serving individuals, ISPs 16 may also enter into agreements with roaming service providers whereby customers of the roaming service providers may use the ISP's network. Use of the network by the customer is then charged to the roaming service provider. ISPs also serve large companies, providing a direct connection from the company's networks to the Internet 18. ISPs themselves are connected to one another through Network Access Points (NAPs) 22.

ISPs 16 generally provide a plurality of Point-Of-Presence (POP) gateways that define network connection or access points for the customer to gain Internet access by making a local telephone call using the connection application. Thus, a POP 24 is an access point to the Internet 18 that is associated with a telephone number.

Yet another component of one embodiment of the present invention is a servlet. Servlets are Java applications, which run on a Web server or application server and provide server-side processing, typically to access a database. It is a Java-based alternative to Common Gateway Interface (CGI) scripts, interface programs, usually written in C or PERL, which enables an Internet server to run external programs to perform a specific function.

Architecture

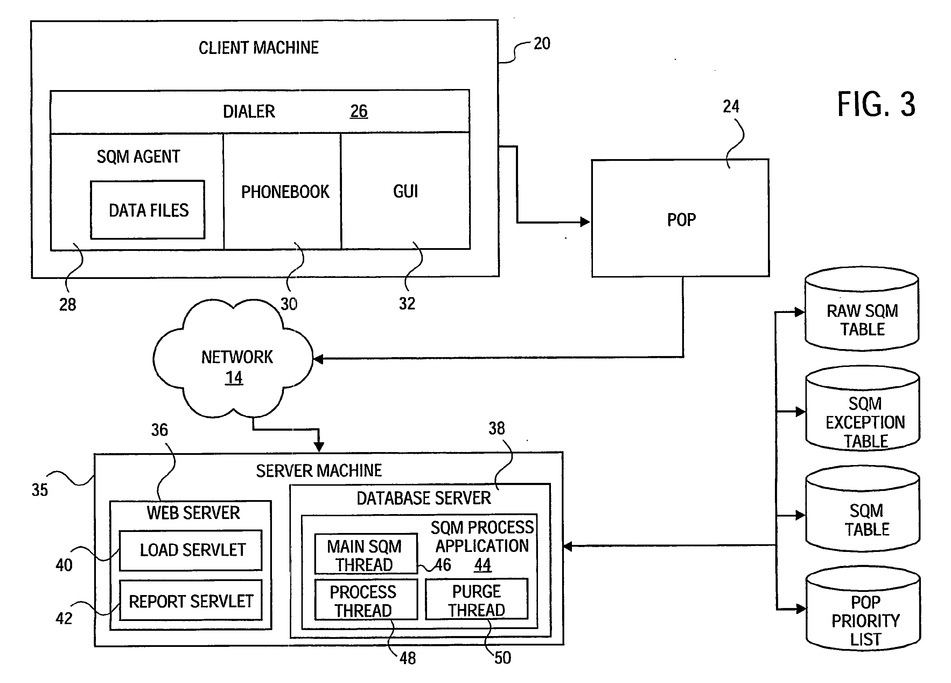

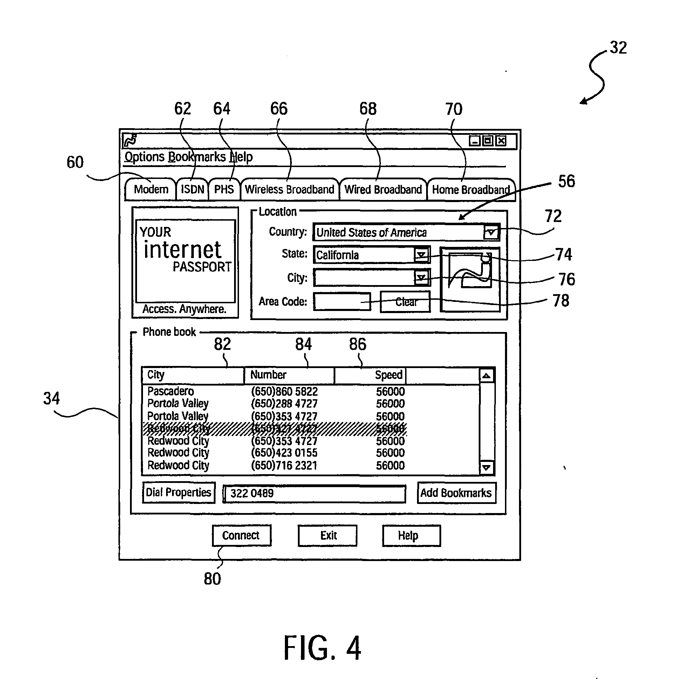

With these concepts in mind, an embodiment of system architecture of the present invention can be explored (see Figure 3). The client machine 20, running a connection application 26 (in the exemplary form of a dialer), can establish a network connection via the POP 24 to the network 14. As mentioned above, the POP 24 may be any one of many globally located POPs. In one embodiment, the connection application 26 may include a Service Quality Management (SQM) agent 28 (see Figure 3) for collecting network connection performance data and for maintaining files storing the collected information, a phonebook 30, and a Graphical User Interface (GUI) 32 (see Figure 4) that displays a list of POPs based on the priority list 34 of the phonebook 30. The GUI 32 allows a user to identify his/her current geographical location and select an access point in close geographical proximity to the user. The connection application 26 may thus establish a local telephone connection to connect to the Internet and/or a corporate Virtual Private Network (VPN).

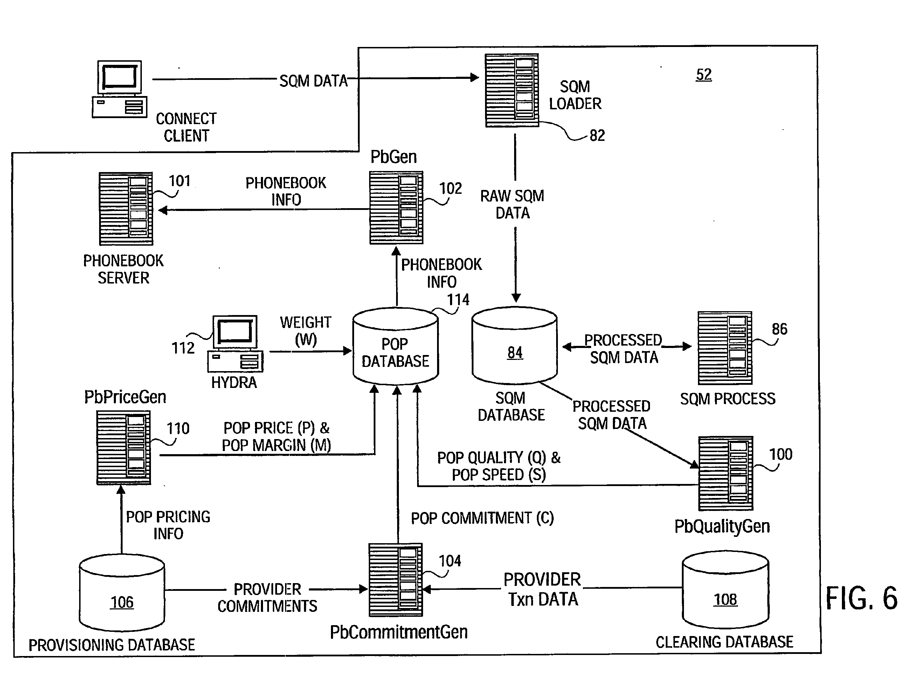

In one embodiment of the present invention, a server machine 35 (on which the server program 10 may reside) includes a web server 36 and a database server 38. The web server 36 may include load servlet 40 and report servlet 42 database applications. The database server 38 includes an SQM process application 44 consisting of a main SQM thread 46, and process thread 48 and purge thread 50 components. These components may be responsible for storing and normalizing data for service quality analysis. Although Figure 3 shows the applications running on a single server 38, these components may run on one or more servers as shown in Figure 6 (discussed in more detail below).

Methodology

With these concepts in mind, an exemplary embodiment of the methodology of the present invention can be further explored. In one embodiment of the present invention, global connectivity services may be provided that give users access to the Internet 18 from any location in the world. As mentioned above, users may connect utilizing a client connection application 26 to connect to the Internet 18 via a local ISP 16. In one embodiment, users may specify an access type and a location using the GUI 32 (see Figure 4), and select a local connection point from the list of POPs 34.

However, circumstances may arise where the roaming access service provider may wish to exercise at least some control or influence over the list of connection points or POPs 34 (listed in the phonebook 30) and/or the order in which the POPs 24 are presented to the user or customer. Thus, by altering the order in which the access points or POPs are provided in the phonebook, the roaming access service provider can drive up the usage of particular POP 24 and thus use of a particular network. For example, the order in which the POPs 24 are provided may be dependent upon access point quality, price, the roaming access service provider's profit margin, the roaming access service provider's commitments to the provider of the network, access point connection speed, or the like. Each of these criteria might have a different level of importance or weight attached to it. For example, the roaming access service provider may favor a one or more of the POPs 24 due to a greater profit margin relative to other POPs 24, but may still want to give the user an option of choosing a high-quality access point or an access point that is cheaper for the user. The system and method in accordance with the present invention facilitates the management of the connection application 26 to control or influence the order of the POPs 24 presented to the user.

Figure 6 shows a schematic representation of a system in accordance with the invention to manage connection of a connection application to one of a plurality of network connection points. The connection application 26 is in the exemplary form of a dialer (see Figure 3) and the connection point is typically a POP 24 (see Figures 2 and 3). The roaming access service provider may distribute and manage the connection application 26 using a management system 52 (see Figure 6), in accordance with one embodiment of the invention.

The connection application 26, also in accordance with an aspect of the invention, includes a list or directory 34 of access points or POPs 24, at least some of which have weighted criteria associated with the POP 24. The weighted criteria influence the order in which the POPs 24 appear in a list 34 of appropriate POPs 24 provided to a user. The appropriate POPs 24 are presented to the user based on the location information selected in a location section 56 of the GUI 32 (see Figure 4).

In one embodiment, the prioritization of the POPs 24 is based on a priority indicator derived from a plurality of weighted selection criteria associated with each POP 24. Thus, the normalized weight may influence the relative position of the POP 24 with respect to other appropriate POPs 24. For example, as described in more detail below, the selection criteria may be (but not limited to):

Price (P);
Quality (Q);
Speed (S);
Margin (M);
Commitment (C); and
Provider selected Weight (W).

These criteria may then be processed to obtain the preference indicator that the connection application 26 may use so as to present POPs 24 to the user in an order controlled or influenced by the management system 52. It is however to be appreciated that not all access points or POPs require associated selection criteria.

In one exemplary embodiment, each selection criteria is normalized to a value between 0 and 100 to provide a selection weight. The sort order or relative priority of each access point or POP may then be based on the sum of the selection weight multiplied by a constant or bias (Cx) associated with each of the criteria:

$$\text{Preference Indicator} = (P \ast Cp) + (Q \ast Cq) + (S \ast Cs) + (M \ast Cm) + (C \ast Cc) + (W \ast Cw).$$

Dependent upon the particular implementation, the constants or bias may be set at a global level for some or all criteria. For example, if increasing the profit margin is important, the constant Cm may be raised for all profiles so that margin is weighted more heavily.

In certain embodiments, the selection weights of the selection criteria may be set or chosen per-customer. For example, although the roaming service provider may weigh profit margins heavily, this may need to be balanced against a particular customer's Service Level Agreement (SLA) and, under these circumstances, the customer's profile may have Cm lowered and Cq raised.

In one embodiment, the exemplary selection criteria may be determined as follows:

Price (P) - P may be defined as the price of the particular POP relative to the price of all POPs in the particular pricing plan, for example, P = (Price - Min(Price)) / (Max(Price) - Min(Price)) * 100;

Quality (Q)- Q may be defined as the percentage of successful connections to the particular POP out of the total number of connection attempts of which failures are not due to user error, for example, Q = (Total Success) / (Total Calls - User Errors) * 100;

Speed (S)- S may be defined as the speed of the particular POP relative to the speed of all POPs, for example, S = (Baud - Min(Baud)) / (Max(Baud) - Min(Baud)) * 100;

Margin (M) - M may be defined to be the margin available on the particular POP relative to the margin available on all POPs in the particular pricing plan, for example, M = (Margin - Min(Margin)) / (Max(Margin) - Min(Margin)) * 100;

Commitment (C) - C may be defined as the percentage of commitment remaining in the period relative to all other commitments in the period, for example, C = ((Commit - COGS) / TotalCommit) * 100;

where COGS or the Cost of goods may be the cost paid to the network provider by the roaming access service provider for providing Internet access. TotalCommit may be calculated using as follows:

TotalCommit = Sum(Commit - COGS) for ALL providers,

and COGS for Fixed Ports are calculated as HoursUsed * (Cost/Month)/(Port*Hours/Month); and

Provider Selected Weight (W) - W may be an arbitrary integer from 0-100 assigned by roaming access service provider to handle, for example, abnormal cases.

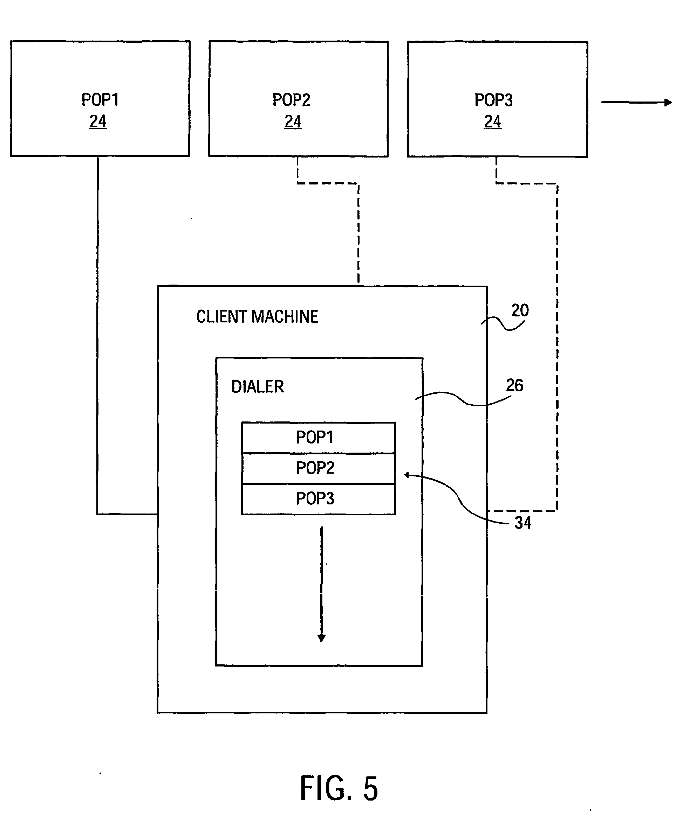

Circumstances may however arise in which the access point or POP management methodology described herein may produce a POP list wherein all POPs 24 at the top of the list 34 presented to the user are from the same access provider. Under these circumstances, the quality of the service provided to the customer may be adversely affected if the network of the POP provider fails (e.g. the client machine 20 may be unable to establish a connection to the provider's POP). This may require a customer or user to make multiple attempts to connect to the network using the numbers from the top of the list. Accordingly, in one embodiment of the invention, the management system 52 may diversify the priority list. The diversified priority list presented to the user may then be based not only on the selection criteria but also include POPs 24 from different service providers (see Figure 5). For example, in one embodiment, the connection application 26 may override the access points prioritization list 34 generated by the above methodology to ensure that the top of the list has diversity with respect to the access providers.

The exemplary GUI 32 in Figure 4 shows the presentation of the access points or POPs to the user in the form of the list of access points 34. Although the user may scroll through the entire list of access points, the connection application 26 presents appropriate access points 34 to the user that are relevant to the user's current location.

In order to establish a network connection, the user enables the connection application 26 that then generates the GUI 32. The user may then select the particular type of connection to be established. For example, the user my select a "Modem" tab 60 to establish a dialup connection, an "ISDN" tab 62 to establish a connection via an ISDN line, a "PHS" tab 64 for a PHS connection, a "Wireless Broadband" tab 66 to establish a connection via a wireless broadband connection, a "Wired Broadband" tab 68 to establish a connection via a wired broadband connection, and a "Home Broadband" tab 70 to establish a connection via a home broadband connection.

When a user selects the "Modem" tab 60, the user may use a dropdown menu 72 to select a country, a state dropdown menus 74 to select a state, or a city dropdown menu 76 to select a city in which in which the user is presently located. By specifying the country, state or city where the user is, only access points that are in proximity to the specified location may then be displayed. In addition or instead, the user may enter NPA/NXX area code in the field 78. By specifying the NPA/NXX area code of the originating telephone number, only access points in the area of the specified exchange are displayed.

In response to the information entered in the location section 56, the connection application 26 presents the appropriate POPs 24 to the user in the list 34 based on the selection criteria and the priority list. As users tend to choose entries at the top of a displayed list, it is likely that the user will choose a POP preferred by the roaming service provider. After the user has selected a POP 24 from the list 34, the user may then select the "Connect" button 80 to initiate the network connection.

The location section 56 may thus define a filter arrangement that filters the access points or POPs 24 displayed to the user. Accordingly, the user may locate nearby POPs thereby to reduce telephone line usage charges.

In one embodiment, the POPs are sorted in an order based on the criteria mentioned above which enables the roaming service provider to adjust the priority of entries in the list 34 according to internal policies. However, in other embodiments, the connection application 26 allows the user to click column headers 82, 84 and 86 to sort the POPs 24 according to the selected column.

More detailed functionality of the connection application 26 (see Figure 3) and management system 52 is now provided.

SOM Clients/ agent

The SQM Client component/Agent 28 of the connection application 26 collects user experience information on each connection attempt by the connection application 26. Table I below shows exemplary data collected by the SQM client 28.

Table I

| Field Position | Field Description |
|---|---|
| 1 | User ID (e.g. someone@company.org) |
| 2 | OS Version |
| 3 | Tool Used e.g. "Thruput.exe 3.01" |
| 4 | RAS Version |
| 5 | RAS Device Name |
| 6 | RAS Device Type |
| 7 | Source Country Code (country from where the user is dialing) |
| 8 | Source Area Code (area code from where the user is dialing) |
| 9 | Source Location |
| 10 | Destination Country Code |
| 11 | Destination Area Code |
| 12 | Destination Phone number (the actual dialed string) |
| 13 | POP ID (the id of the pop the user selected from the phonebook) |
| 14 | Script |
| 15 | Connection Type |
| 16 | Software compression |
| 17 | PPP LCP Extensions |
| 18 | Dial start time |
| 19 | Dial stop time |
| 20 | Time taken |
| 21 | VPN start time |
| 22 | VPN stop time |
| 23 | VPN Time taken |
| 24 | Server IP address |

(continued)

| Field Position | Field Description |
|---|---|
| 25 | Client IP Address |
| 26 | Baud rate |
| 27 | Download start time |
| 28 | Download stop time |
| 29 | Download speed |
| 30 | Error Code |
| 31 | Dialer version |
| 32 | Profile ID (profile id's are maintained in the phonebook used in the dialer) |
| 33 | Full user ID (is the user id string sent to NAS for authentication) |
| 34 | Modem phone |
| 35 | Modem Negotiated Time |
| 36 | Pop Type |
| 37 | Pop Country Code |
| 38 | Pop State ID |
| 39 | Pop City |
| 40 | Access Procedure (used by the access point/POP - may be specified only if the connection attempt is to a Broadband access point) |
| 41 | Location code (of the access point connected to - may be specified only if the connection attempt is to a broadband access point) |
| 42 | Language |
| 43 | SQM Unique Session Id |
| 44 | Session Length - The length of the session, determined after the end of the session |
| 45 | Disconnect Reason |
| 46 | Access Type |
| 47 | Location Description - The description of the geographical location of the POP. This value may be obtained from the server via the Location Discovery call. |
| 48 | Location Group Id - Maps the POP to the pricing details. This value |
| | may be obtained from the server via the Location Discovery call. |
| 49 | Client MAC (Media Access Control) Address |
| 50 | Access Point MAC Address |
| 51 | Signal Strength at the time of the establishment of the connection |

The SQM client 28 may store the connection experience data in a local file as a comma separated list of values. Each line of this file may correspond to one connection attempt by the connection application 26. The entire file containing the connection information collected by the SQM client 28 may be transmitted to a SQM loader 82 (see below) after the client machine 20 connects to the Internet 18.

SQM Loader

Referring in particular to Figure 6, the SQM loader 82, which forms part of the management system 52, may receive an entire file containing the connection information from the SQM client 28. Transmission of this file may occur using HTTPS to an SQM loader servlet (see load servlet 40 in Figure 3) located at a predetermined URL (e.g. "sqm.roamprovider.com/servlet/sqm"). The SQM loader 82 may read a character stream from the servlet input and chop it up into 2k byte data segments. The data may then be stored, for example in a raw format (e.g. in a raw_sqm table - see Table II below) in a SQM Database 84. The following exemplary tables may be used for storing this raw SQM data:

Table Name: RAW_SQM

Table II

| Field Name | Type |
|---|---|
| *Raw_sqm_id* | VARCHAR2 (32) primary key |
| *Status* | VARCHAR2 (20) |
| *Timestamp* | DATE |

Table Name: RAW_SQM_DATA

Table III

| Field Name | Type |
|---|---|
| *Raw_sqm_id* | VARCHAR2 (32) references RAW_SQM.Raw_sqm_id |
| *data* | VARCHAR2 (2000) |
| *Seqno* | NUMBER |

SQM Process

The SQM Process tool 86 (see also the SQM process application 44 of Figure 3) such as a Java Application may be used for processing the raw SQM data. In one embodiment, the SQM process tool 86 parses the raw SQM data and creates SQM records. Each record in the SQM table may correspond to a connection attempt by the connection application 26. In particular, SQM Process tool 86 waits for raw data in the SQM database 84 to be queued for processing by the SQM loader 82. For example, the SQM Process tool 86 may periodically examine the RAW_SQM.STATUS field (see Table II above) for any records that have a status of 'RAW'. The SQM process tool 86 may then retrieve these records from the RAW_SQM table and processes them to produce processed SQM data.

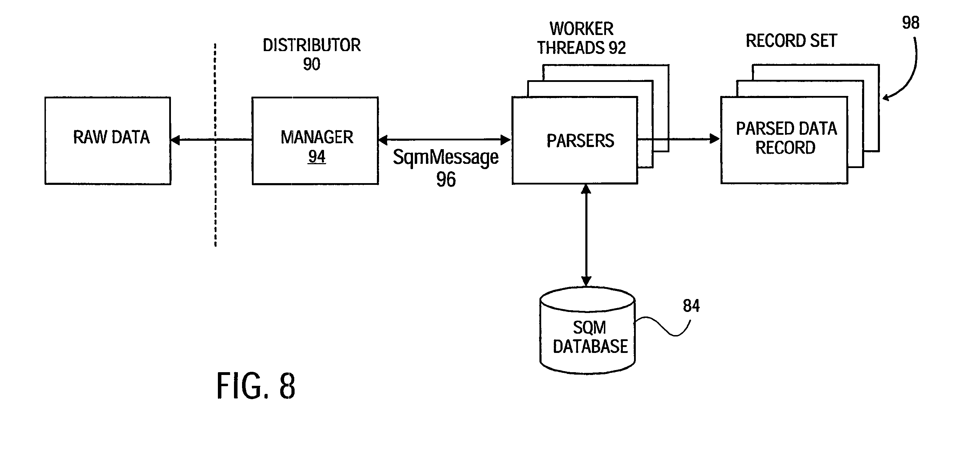

Figure 8 shows exemplary SQM process modules to implement in this process. A distributor module 90 manages the instantiation of worker threads in a worker thread module 92 and subsequent distribution of the raw data for parsing to parser threads. Each individual parser thread may be responsible for notifying completion of its task to a manager 94. Java's notification mechanism may be used for synchronizing within a wait and distribute algorithm. An SqmMessage object 96 may be used for encapsulating notification data.

The worker thread module 92 of the SQM process tool 86 may determine connection location (access point/POP), customer information, and unique session identification information and store this information in the SQM database 84 (see Figures 6 and 8). The worker thread module 92 of the SQM process tool 86 may also adjust the timing of the occurrence of each connection attempt and synchronizes them with the system time on the server. Finally, the worker thread module 92 of the SQM process tool 86 may store processed SQM records 98 in the following exemplary table:

Table Name: SQM

Table IV

| Field Name | Type |
|---|---|
| *Record_id* | VARCHAR2 (32) primary key |

(continued)

| Field Name | Type |
| --- | --- |
| Customer_id | VARCHAR2 (32) |
| User_Id | VARCHAR2 (256) |
| OS_Version | VARCHAR2 (80) |
| Tool_Used | VARCHAR2 (80) |
| RAS_Version | VARCHAR2 (80) |
| RAS_Device_name | VARCHAR2 (80) |
| RAS_Device_type | VARCHAR2 (25) |
| Error_code | NUMBER |
| Source_Country_code | VARCHAR2 (5) |
| Source_Area_code | VARCHAR2 (10) |
| Source_Location | VARCHAR2 (80) |
| Dest_Country_code | VARCHAR2 (5) |
| Dest_Area_code | VARCHAR2 (5) |
| Dest_Phone_number | VARCHAR2 (32) |
| Pop_ID | VARCHAR2 (32) |
| Pop_Resolve_status | VARCHAR2 (10) |
| Script | VARCHAR2 (15) |
| Connection_Type | VARCHAR2 (20) |
| Software_Compression | NUMBER |
| PPP_LCP_Extensions | NUMBER |
| Dial_Start_Time | DATE |
| Dial_Stop_Time | DATE |
| Time_Taken | NUMBER |
| Vpn_Start_Time | DATE |
| Vpn_Stop_Time | DATE |
| Vpn_Time_Taken | NUMBER |
| Server_IP_Address | VARCHAR2 (16) |
| Client_IP_Address | VARCHAR2 (16) |
| Baud_Rate | NUMBER |
| Download_Start | DATE |
| Download_Stop | DATE |
| Download_Speed | NUMBER |
| Create_Time | DATE |
| Dialer_Version | VARCHAR2 (80) |
| Full_User_ID | VARCHAR2 (256) |
| Modem_Phone | VARCHAR2 (32) |
| Pop_City | VARCHAR2 (40) |
| Pop_State_Id | VARCHAR2 (32) |

(continued)

| Field Name | Type |
| --- | --- |
| Pop_Country_Code | VARCHAR2 (2) |
| Pop_Type | VARCHAR2 (20) |
| Profile_ID | VARCHAR2 (32) |
| Modem_Negotiated_Time | DATE |

In one embodiment, the SQM agent 28 may collect network connection performance data of a number of POPs with which the connection application 26 attempts to establish a connection and store the data in the client machine 20. For example, the network connection performance data may include a number of parameters related to a user, software and hardware configurations of the client machine 20, a user location, a network access location (e.g., a location dialed by modem), timing related to various operations in a connection process (e.g. quality and speed), POP related information, client and server IP addresses, baud rates, error codes reflecting connection errors, or the like. The network performance data may define selection criteria to which an appropriate weight may be assigned.

The error codes returned to the user upon a connection attempt may broadly be divided into three exemplary categories namely (1) successful dial in connection, (2) user errors and (3) network problems. The user errors typically occur due to a user name and password problems, missing or disconnected modems, incorrect dialing codes, or incorrect or hand-edited phone numbers. Examples of the user errors include:

1. Access denied due to invalid user name or password;
2. The user cancelled operation;
3. Device/configurations error (e.g., port not ready, port already opened, modem not connected, no dial tone detected); and
4. Person answered instead of modem (e.g., incorrect phone number dialed).

Examples of network errors include:

1. Line busy;
2. No answer;
3. PPP time out;
4. Connection dropped;
5. Remote access server not responding; and
6. Port disconnected by remote computer.

When a successful network connection with one of the POPs is established, the SQM agent 28 may transmit the collected data to the server machine 35. In one embodiment, the SQM agent 28 may collect network connection performance data relating to every POP via which it tries to establish a network connection. Upon establishment of a successful network connection with one of the POPs, the SQM agent 28 may compose a message comprising network connection performance data along with software and hardware configuration data and the POP identification numbers to which the network connection performance data relates and transmits the message to the database server 38 (see Figure 3).

The web server 36, upon receiving the collected data at the server machine 35 may invokes the load servlet 40 that stores received data in a RAW SQM table. The data may then be processed and, in response thereto, the system and method may change the weight associated with each selection criteria. The updated selection criteria, weights associated with each selection criteria and bias may be communicated to the connection application 26.

Phonebook Duality Generator

The management system 52 may also include an access point or phonebook quality generation tool 100 (e.g. a Java application). The tool 100 may use the SQM data for determining the quality as well as the speed of each access point. The tool 100 may update a POP table (see below) with calculated values. Typically, this tool 100 is run before the phonebooks (including the telephone numbers of the POPs) are published by a phonebook server 101.

Table Name: POP

Table V

| Field Name | Type |
| --- | --- |
| Pop_id | VARCHAR2(32) primary key |
| Provider_id | VARCHAR2(32) not null |
| Media_access_type | VARCHAR2(32) not null |
| Quality_rating | NUMBER |
| Speed | NUMBER |
| Location_group_id | VARCHAR2(32) not null |
| Provider_Selected_Weight | NUMBER |
| Quality_bias | NUMBER |
| Speed_bias | NUMBER |
| Commitment_bias | NUMBER |
| Price_bias | NUMBER |
| Margin_bias | NUMBER |

Quality Rating

As mentioned above, the quality rating of the access point may be defined as the percentage of successful connections to this access point out of the total number of connection attempts of which failures are not due to user error:

$$Q = (\text{Total Success}) / (\text{Total Calls} - \text{User Errors}) * 100.$$

An error_code field (see Table VI below) of the SQM data may specify the error, if any that occurred during a connection attempt. In one embodiment, the SQM_ERROR_CODES table categorizes the errors as follows:

NET: Errors caused due to Network problems;
OK: Not an error. The connection was successful;
UNKNOWN: The cause of the error is unknown; and
USER: The error was caused by the User.

Table Name: SQM_ERROR_CODES

Table VI

| Field Name | Type |
| --- | --- |
| Error_code | NUMBER primary key |
| ERROR_CATEGORY | VARCHAR2 (10) |
| ERROR_MSG | VARCHAR2 (10) |

In one embodiment, the phonebook quality generator tool 100 calculates the quality rating (Q) of each POP 24 using the above formula and then updates the quality_rating field of the POP table (Table V above).

Speed of Connection provided by selected access point

The speed provided by the access point may be defined as the speed of the particular access point relative to the speed of all access points of the same access_type (DIAL_UP, ISDN, WIRED Broadband, Wireless (802.11b) Broadband, Wireless (802.11a) Broadband, or the like):

$$S = (Baud - Min(Baud)) \: / \: (Max(Baud) - Min(Baud)) * 100.$$

The baud_rate field of the SQM table may specify the negotiated speed of the connection. The phonebook quality generator tool 100 may calculate the speed rating of each access point using the above formula and update the speed field of the POP table (Table V above).

Phonebook Commitment Generator

The management system 52 also includes a phonebook commitment generator tool 104 to provide a commitment rating associated with each network or access point provider. The commitment rating may be defined as the percentage of commitment to the provider remaining in the period relative to the percentage of margin remaining for all other commitments in this period:

$$C = ((Commit - COGS) \: / \: TotalCommit) * 100,$$

where COGS or the Cost of goods may be the cost paid to the network provider by the roaming access service provider for providing Internet access to the user.

The total commitments may be calculated using the following formula:

$$TotalCommit = Sum(Commit - COGS) \text{ for ALL providers.}$$

Commit is the commitment for the current period. The phonebook commitment generator tool 104 obtains the service provider commitment details from a PROVIDER_COMMITMENT table (Table VI below) from a provisioning database 106 of a provisioning system. A network quality group may initially populate the table when a contract is negotiated and each service provider is provisioned. The commitment_this_period field may be updated by the phonebook commitment generator tool 104 whenever it runs.

Table Name: PROVIDER_COMMITMENT

Table VI

| Field Name | Type |
|---|---|
| *Provider_id* | VARCHAR2(32) not null |
| *Pop_id* | VARCHAR2(32) null |
| *Media_Access_Type* | VARCHAR2(32) null |
| *Cycle_start_date* | DATE not null |
| *Cycle_end_date* | DATE not null |
| *Commitment_for_this_period* | NUMBER |

Cost of goods

The Cost of goods (COGS) may be calculated dependent upon each type of service provider. The roaming access provider may, for example, include one or more of the following types of service providers:

Flat rate providers that charge a usage-based amount for providing access. For example, $x per hour of usage; and

Fixed rate providers that charge a fixed amount for the period. For example, $y per month.

COGS for the Flat rate providers may be calculated as the total usage provided for a current period. The usage provided by the service provider may be available in a billing event (BE) table (see Table VII below) in a clearing database 108 of a clearing system. The COGS may be calculated by summing up the total amount of services provided by the service provider (payee_id = provider_id) for the current period (date between cycle_start_date and cycle_end_date).

Table Name: BE

Table VII

| Field Name | Type |
|---|---|
| *Payer_id* | VARCHAR2(32) not null |
| *Payee_id* | VARCHAR2(32) not null |
| *Unit_type* | VARCHAR2(32) not null |
| *Unit_Count* | NUMBER not null |
| *Amount* | NUMBER not null |
| *Date* | DATE not null |

The COGS for the fixed rate providers may be calculated as follows:

HoursUsed * (Cost/Month)/(Port*Hours/Month).

The HoursUsed may be the usage provided for the current period. This may be obtained by adding the Unit_Count field from the BE table (Table VII above) for the service provider (payee = provider_id) for the current period (date between cycle_start_date and cycle_end_date). The Cost and the number of ports may be obtained from the provisioning database 106 of the provisioning system. Hours/Month may be the total number of hours for the current period (24 * the number of days in the period).

## Total commitment or TotalCommit may be defined as follows:

## TotalCommit = Sum(Commit – COGS) for ALL providers.

Total commitment may be calculated using the formula described above for all providers, and data from the BE table (Table VII above).

The phonebook commitment generation tool 104 may be a Java application that uses the service provider commitment amounts from the provisioning database 106, and the amount of usage for current account cycle from the clearing database 108, to determine the commitment rating of each access point.

In certain embodiments, the tool 104 updates the POP_COMMITMENT_RATING table (see below) with calculated values. The tool 104 may be run before the phonebooks are published by the phonebook generator tool 102 to the phonebook server 101.

Table Name: POP_COMMITMENT_RATING

Table VIII

| Field Name | Type |
|---|---|
| *Provider_id* | VARCHAR2(32) not null |

**14**

(continued)

| Field Name | Type |
|---|---|
| *Cycle_start_date* | DATE not null |
| *Cycle_end_date* | DATE not null |
| *Pop_id* | VARCHAR2(32) null |
| *Media_Access_Type* | VARCHAR2(32) null |
| *Commitment-rating* | NUMBER |

Phonebook Price Generator

The management system 52 includes a phonebook price generator tool 110 that may be used for determining price and profit margin characteristics of each access point. In one embodiment, the tool 110 includes price and margin modules. The tool 110 may update RATE_USAGE and BUY_RATE tables (see Table IX below) with calculated values. The tool 110 may be run before the phonebooks are published by the phonebook generation tool 102 to the phonebook server 101.

The price may be defined as the price of a particular access point relative to the price of all access points in a particular pricing plan:

$$P = (Price - Min(Price)) \ / \ (Max(Price) - Min(Price)) * 100.$$

When a contract is negotiated and the customer is provisioned, each customer may be assigned a pricing plan. The price paid by a customer may be defined in a RATE_USAGE table (Table IX below).

Table Name: RATE_USAGE

Table IX

| Field Name | Type |
|---|---|
| *Rate_usage_id* | VARCHAR2(32) primary key |
| *Plan_id* | VARCHAR2(32) references PRICING_PLAN.plan_id |
| *Media_access_type* | VARCHAR2(32) not null |
| *Location _group_id* | VARCHAR2(32) not null |
| *Sell_Rate* | NUMBER |
| *Rating_rate* | NUMBER |
| *Pricing_rating* | NUMBER |

The RATE_USAGE Table may include a location_group that refers to a collection of access_points priced similarly. The POP table (Table V above) may provide an association between an access point and its location_group. In certain embodiments, the phonebook price generation tool 110 may calculate the pricing_rating of each row in the RATE_USAGE table using the formula shown above and, in response thereto, update the pricing_rating field of the RATE_USAGE table.

The profit margin may be defined as the margin available on the particular access point relative to the margin available on all access points in a particular pricing plan:

$$M = (Margin - Min(Margin)) \ / \ (Max(Margin) - Min(Margin)) * 100.$$

When a contract is negotiated and a service provider (ISP) is provisioned, the price paid by roaming access service provider to the ISP for access may be defined in a BUY_RATE table (Table X below).

Table Name: BUY_RATE

Table X

| Field Name | Type |
|---|---|
| Buy_rate_id | VARCHAR2(32) primary key |
| Plan_id | VARCHAR2(32) references PRICING_PLAN.plan_id |
| Media_access_type | VARCHAR2(32) not null |
| Location_group_id | VARCHAR2(32) not null |
| Buy_rate | NUMBER |
| Margin_rating | NUMBER |

The Phonebook Price Generation tool 110 may calculate the margin_rating of each row in the BUY_RATE table using the formula shown above and update the margin_rating field of the BUY_RATE table.

Provider Selected Weight

The provider selected weight is a factor or criteria that may be selected by the roaming access service provider to handle abnormal cases. The provider selected weight may be an integer from 0 to 100. The POP table (Table V above) may thus include a provider_selected_weight field. This field may be set to 0 by default. A network quality group of the roaming access service provider may choose to alter this value based on a criteria not covered explicitly. In certain circumstances the network quality group may utilize a Hydra-based system 112 as a data management tool for setting this value which is stored in a POP database 114.

Phonebook Generation

As mentioned above, the management system 52 includes the phonebook generation tool 102 for creating the phonebook and phonebook delta files (files to update or change the phonebook resident on the client machine 20). In one embodiment, the tool 102 is a Java application and may use an Oracle™ database to store and manipulate the phonebook data. The Java program may communicate with the Oracle™ database using, for example, Java DataBase Connectivity (JDBC) protocol.

The tool 102 publishes the phonebook and delta files to the phonebook server 101, which may be the web server 36 (see Figure 3). In certain embodiments, the tool 102 can be run on demand to generate phonebooks and delta files and place these files on the phonebook server 101 for publication. The phonebooks can be customized to fit the needs of the customer. For example, access points may be removed or filtered, and rules for pricing the access points may be set up as described herein.

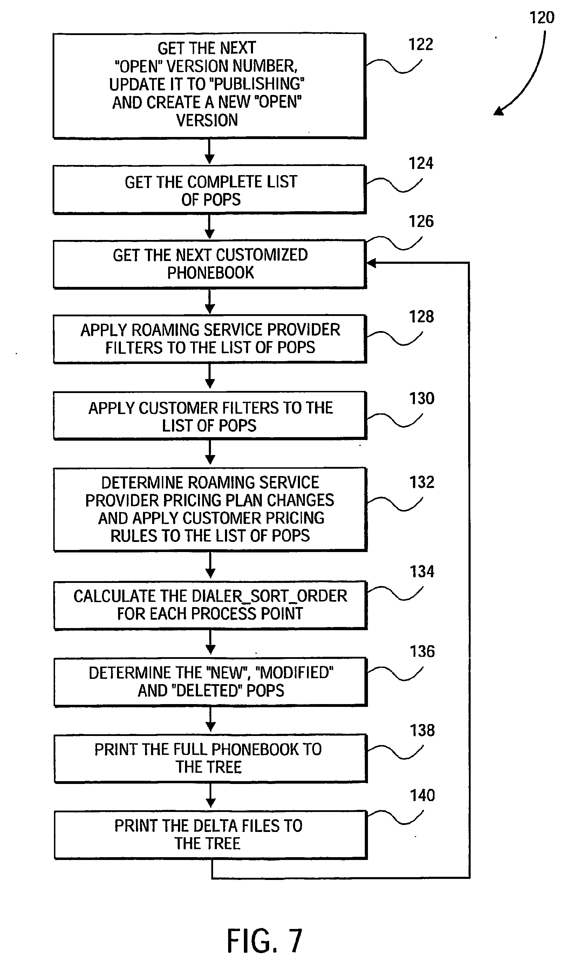

Referring in particular to Figure 7 of the drawings, reference numeral 120 generally indicates an exemplary method executed by the phonebook generation tool 102. The phonebook generation tool 102 may maintain a current "open" phonebook version number and tag all database changes with this version number. Each run of the tool 102 may then increase the version number of the phonebook by one (1). When the tool 102 runs, it may close the current "open" version number and open a new "open" version number. All subsequent changes to the database may then be tagged with the new "open" version number (see block 122 in Figure 7).

The phonebook generation tool 102 may determine changes to the POP database 114 since its last run and generate a full phonebook and delta file (see block 124) for each customized phonebook, wherein the POPs listed in the phonebook are ordered based upon the selection criteria. The full phonebook file may contain all non-filtered access points with the customized price. The delta files may contain cumulative changes to the phonebook since the version was published.

Phonebooks may be customized for individual clients or customers. Thus, individual phonebooks may be managed so that the roaming access service provider can influence the operation of the connection application 26 used by a particular client. The method 120, when generating a phonebook, gets the next phonebook to be generated at block 126. Thereafter, the computed list of POPs (see block 124) is filtered at block 128 based on filters defined by the roaming access service provider, and filtered again at block 130 based on filters defined by the customers. At block 132 pricing plan changes of the roaming access service provider are determined and customer pricing rules are applied to the list of POPs. Thereafter, the prioritized order of the POP is determined based on the selection criteria as shown at block 134. New, modified and deleted POPs may be determined at block 136.

As shown at blocks 138 and 140, the phonebooks may then be published to the web server 36 with the following exemplary tree structure:

Full Phonebook - version/<versionN>/pb/<phonebook_id>/pbook.txt
Delta Files - version/<versionN>/pb/<phonebook_id>/pbook.txt.1 ... version/<versionN>/pb/<phonebook_id>/pbook.txt.<N-1>

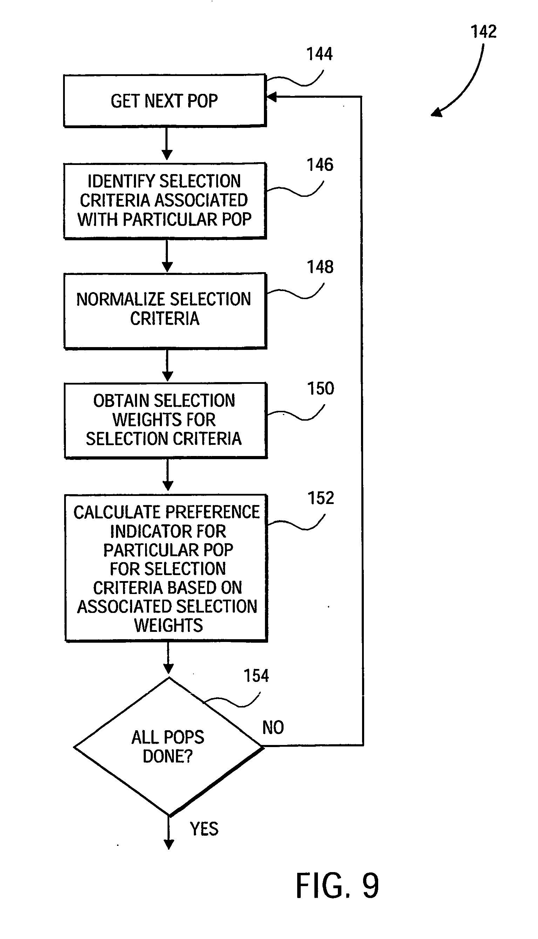

Figure 9 shows an exemplary method 142, for calculating a preference indicator that can be used to prioritize the POPs 24 in the priority list 34. The method 142 executes the functionality of block 134 in Figure 7. For each POP 24 (see block 144), the selection criteria that are associated with the POP are identified (see block 146). At block 148 the selection criteria are normalized. Thereafter the selection weights associated with each selection criteria are obtained (see block 150) and the preference indicator is calculated at block 152. The method 142 then, at decision block 154, checks to see if a preference indicator has been calculated for all of the POPs 24. If so, the method proceeds to block 136 (see Figure 7) and, if not, returns to block 144.

The version number N may be the new version being published and a phonebook_id may identify the customized phonebook used by the connection application 26 provided by the roaming access service provider. Delta files from version 1 through to version N-1 may be printed. If the size of a delta file is more than 75% of the size of the phonebook, the delta file may then not be generated and the entire phonebook and not merely the changes is printed.

In certain embodiments, the phonebook generator 102 utilizes the POP, RATE_USAGE, and BUY_RATE tables (see above) while generating the phonebook files. This data may then be managed via the Hydra-based system 112, which may be part of a payment settlement system.

In the embodiment depicted in the drawings, the phonebook generation tool 102 also calculates the sort order of each access point using the formula described above. The phonebook generation tool 102 may print the sort order in a dialer_sort_order field of the phonebook. The constants (bias) may be set at a global level (customer_id = roaming service provider's Customer_id) for some or all selection criteria. In addition or instead, the constants (bias) may be adjusted on a customer level. For example, such circumstances may arise where a roaming service provider weighs profit margins heavily, but a particular customer has a high Service Level Agreement. The customer's profile may then have Cm lowered and Cq raised.

Table Name: Customer_Bias

Table XI

| Customer_id | VARCHAR2(32) not null |
|---|---|
| Quality_bias | NUMBER |
| Speed_bias | NUMBER |
| Commitment_bias | NUMBER |
| Price_bias | NUMBER |
| Margin_bias | NUMBER |
| Weight_bias | NUMBER |

The phonebook 30 on the client machine 20 may be automatically updated after the user establishes a successful connection to the Internet 18. The updating of the phonebook 30 may be performed by modifying an existing phonebook 30 stored on the client machine 20, or may be performed by uploading a complete and new phonebook 30, as generated on the phonebook generation tool 102. For example, upon the generation of a complete and new phonebook 30, the new phonebook 30 may be "pushed out" from the phonebook server 101 to multiple client machines 20. In one embodiment of the present invention, the user may choose not to receive an automatic update of the phonebook 30. In this embodiment the user may access a Web site maintained at the server machine 35 (see Figure 3) where a copy of the latest phonebook may be viewed and downloaded.

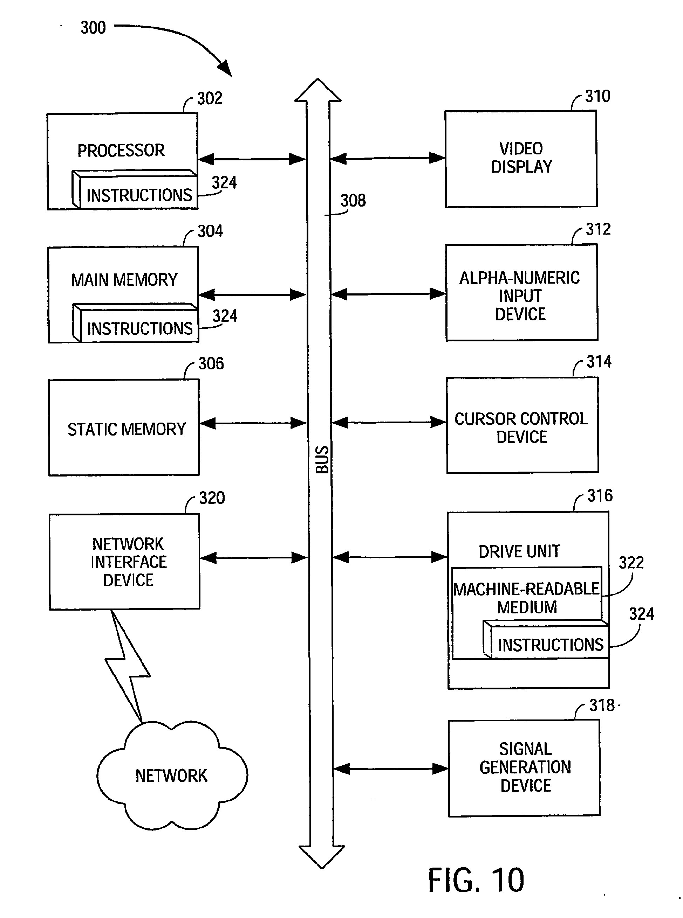

Figure 10 shows a diagrammatic representation of machine in the exemplary form of the computer system 300 within which a set of instructions, for causing the machine to perform any one of the methodologies discussed above, may be executed. In alternative embodiments, the machine may comprise a network router, a network switch, a network bridge, Personal Digital Assistant (PDA), a cellular telephone, a web appliance or any machine capable of executing a sequence of instructions that specify actions to be taken by that machine.

The computer system 300 includes a processor 302, a main memory 304 and a static memory 306, which communicate with each other via a bus 308. The computer system 300 may further include a video display unit 310 (e.g., a liquid crystal display (LCD) or a cathode ray tube (CRT)). The computer system 300 also includes an alphanumeric input device 312 (e.g. a keyboard), a cursor control device 314 (e.g. a mouse), a disk drive unit 316, a signal generation device 318 (e.g. a speaker) and a network interface device 320.

The disk drive unit 316 includes a machine-readable medium 322 on which is stored a set of instructions (i.e., software) 324 embodying any one, or all, of the methodologies described above. The software 324 is also shown to reside, completely or at least partially, within the main memory 304 and/or within the processor 302. The software 324 may further be transmitted or received via the network interface device 320. For the purposes of this specification, the term "machine-readable medium" shall be taken to include any medium which is capable of storing or encoding a sequence of instructions for execution by the machine and that cause the machine to perform any one of the methodologies of the present invention. The term "machine-readable medium" shall accordingly be taken to included, but not be limited to, solid-state memories, optical and magnetic disks, and carrier wave signals.

In the foregoing specification the present invention has been described with reference to specific exemplary embodiments thereof. It will, however, be evident that various modifications and changes may be made to the specific exemplary embodiments without departing from the broader scope of the invention as set forth in the appended claims. Accordingly, the specification and drawings are to be regarded in an illustrative rather than a restrictive sense.

## Claims

1. A method for managing a network connection application (26), the method including:

   assigning a plurality of selection criteria to each connection point (24), each selection criteria bearing an associated selection weight;
   arranging the connection points (24) in a prioritized order in a priority list used by the connection application (26) to connect to any one of the connection points (24), the prioritized order being based on the selection criteria and associated selection weights;
   and
   making the prioritized list available for use by the connection application (26),
   **characterized by**
   diversifying the connection points (24) in the priority list so that connection points (24) from a plurality of service providers are provided to a user.

2. The method of claim 1, which includes associating a weight bias with each selection weight, the weight bias influencing the priority of the connection point (24).

3. The method of claim 2, which includes normalizing the selection weights.

4. The method of claim 2, which includes: multiplying each weight by its associated bias; and obtaining the sum of the resultant biased weights to define a preference indicator that determines the order of each connection point (24) in the priority list.

5. The method of claim 1, wherein the selection criteria are selected from the group including the price, network connection performance data, profit margin, service commitment associated with the connection point, a user error, a software error, a hardware error, and a network error.

6. The method of claim 5, wherein the network connection performance data includes one of connection speed and throughput.

7. The method of claim 5, wherein the price criteria is a price of the particular connection point relative to the price of all connection points in a particular pricing plan.

8. The method of claim 5, wherein the network connection performance data include connection quality criteria.

9. The method of claim 5, wherein the network connection performance data includes speed criteria defined as a speed of the associated connection point relative to a speed of all connection points.

10. The method of claim 5, wherein the profit margin criteria is defined as a margin available on the associated connection point (24) relative to a margin available on all connection points (24) in a particular pricing plan.

11. The method of claim 5, wherein the provider commitment is defined as a percentage of commitment remaining in a period relative to all other commitments in the period.

12. The method of claim 1, wherein the provider selector weight is integer assigned by a roaming access service provider.

13. The method of claim 1, which includes: storing the prioritized list in a client file; and publishing the client file on a web server for downloading by the connection application (26).

14. The method of claim 1, which includes: collecting network connection performance data; and modifying the prioritized order in the priority list based on the network connection performance data.

15. The method of claim 1, wherein at least one selection criteria is associated with a financial consideration.

16. A management system (52) to manage a connection application, the system (52) including:

a network interface to interface the management system (52) to a network (18) providing a plurality of network connection points (24) via which a client machine can connect to the network using the connection application (26); and
a server machine (35) connected to the network (18), wherein the server machine (35) assigns a plurality of selection criteria to each connection point (24), each selection criteria bearing an associated selection weight and the connection points are arranged in a prioritized order in a priority list used by the connection application (26) to connect to any one of the connection points (24), the prioritized order being based on the selection criteria and associated selection weights,
**characterized in that**
the connection points (24) are diversified in the priority list so that connection points(24) from a plurality of service providers are provided to a user.

17. The system of claim 16, wherein a weight bias is associated with each selection weight, the weight bias influencing the priority of the connection point.

18. The system of claim 17, wherein the selection weights are normalized.

19. The system of claim 17, wherein each weight multiplied by its associated bias, and the sum of the resultant biased weights defines a preference indicator that determines the order of each connection point (24) in the priority list.

20. The system of claim 16, wherein the selection criteria are selected from the group including the price, quality, speed, profit margin, and service commitment associated with the connection point (24).

21. The system of claim 16, which includes a web server, the prioritized list being stored in a client file that is published on the web server for downloading by the connection application (26).

22. The system of claim 16, wherein: network connection performance data is collected; and the order in the priority list is prioritized based on the network connection performance data.

23. The system of claim 16, wherein each selection criteria bearing an associated financial consideration.

24. A machine-readable medium embodying a sequence of instructions that, when executed by a machine, cause the machine to carry out the method of any one of claims 1 to 15.

**Patentansprüche**

1. Verfahren zum Verwalten einer Netzwerkverbindungsanwendung (26), wobei das Verfahren umfasst:

   Zuweisen einer Vielzahl von Auswahlkriterien für jeden Verbindungspunkt (24), wobei jedes Auswahlkriterium ein assoziiertes Auswahlgewicht trägt;
   Anordnen der Verbindungspunkte (24) in einer priorisierten Reihenfolge in einer Prioritätsliste, welche von der Verbindungsanwendung (26) zum Verbinden mit irgend einem der Verbindungspunkte (24) benutzt wird, wobei die priorisierte Reihenfolge auf den Auswahlkriterien und assoziierten Auswahlgewichten basiert; und
   Verfügbarmachen der priorisierten Liste zur Benutzung durch die Verbindungsanwendung (26), **gekennzeichnet durch**
   die Diversifizierung der Verbindungspunkte (24) in der Prioritätsliste, so dass die Verbindungspunkte (24) von einer Vielzahl von Dienstanbietem einem Nutzer bereitgestellt werden.

2. Verfahren gemäß Anspruch 1, umfassend das Assoziieren einer Gewichtsverzerrung mit jedem Auswahlgewicht, wobei die Gewichtsverzerrung die Priorität eines Verbindungspunkts (24) beeinflusst.

3. Verfahren gemäß Anspruch 2, umfassend das Normalisieren der Auswahlgewichte.

4. Verfahren gemäß Anspruch 2, umfassend: Multiplizieren jedes Gewichts mit seiner assoziierten Verzerrung; und Erhalten der Summe von den resultierenden verzerrten Gewichten, um einen Präferenzindikator zu definieren, der die Reihenfolge von jedem Verbindungspunkt (24) in der Prioritätsliste bestimmt.

5. Verfahren gemäß Anspruch 1, wobei die Auswahlkriterien ausgewählt sind aus der Gruppe umfassend den Preis, Netzwerkverbindungs-Leistungsdaten, Gewinnmarge, mit dem Verbindungspunkt assoziierte Servicezusage, einen Nutzerfehler, einen Softwarefehler, einen Hardwarefehler und einen Netzwerkfehler.

6. Verfahren gemäß Anspruch 5, wobei die Netzwerkverbindungs-Leistungsdaten eines von Verbindungsgeschwindigkeit und Durchsatz enthalten.

7. Verfahren gemäß Anspruch 5, wobei das Preiskriterium ein Preis von einem bestimmten Verbindungspunkt in Bezug zu dem Preis von allen Verbindungspunkten in einem bestimmten Gebührenplan ist.

8. Verfahren gemäß Anspruch 5, wobei die Netzwerkverbindungs-Leistungsdaten Verbindungsqualitätskriterien enthalten.

9. Verfahren gemäß Anspruch 5, wobei die Netzwerksverbindungs-Leistungsdaten Geschwindigkeitskriterien enthalten, die als Geschwindigkeit von dem assoziierten Verbindungspunkt in Bezug zu einer Geschwindigkeit von allen Verbindungspunkten definiert ist.

10. Verfahren gemäß Anspruch 5, wobei das Gewinnmarge-Kriterium als eine an einem assoziierten Verbindungspunkt (24) verfügbare Marge in Bezug zu einer Marge definiert ist, die an allen Verbindungspunkten (24) in einem bestimmten Gebührenplan verfügbar ist.

11. Verfahren gemäß Anspruch 5, wobei die Servicezusage als Prozentsatz von verbleibenden Verpflichtungen in einem Zeitraum in Bezug zu allen anderen Verpflichtungen in dem Zeitraum definiert ist.

12. Verfahren gemäß Anspruch 1, wobei das Anbieterauswahlgewicht ganzzahlig durch einen Roaming-Zugangsdienstanbieter zugewiesen wird.

13. Verfahren gemäß Anspruch 1, umfassend: Speichern der priorisierten Liste in einer Datei eines Clients; und Veröffentlichung der Datei des Clients auf einem Webserver zum Herunterladen durch die Verbindungsanwendung (26).

14. Verfahren gemäß Anspruch 1, umfassend: Sammeln von Netzwerkverbindungs-Leistungsdaten; und Modifizieren der prorisierten Reihenfolge in der Prioritätsliste basierend auf den Netzwerkverbindungs-Leistungsdaten.

15. Verfahren gemäß Anspruch 1, wobei wenigstens ein Ausfallkriterium mit finanziellen Überlegungen verbunden ist.

**16.** Managementsystem (52) zum Verwalten von Verbindungsanwendungen, wobei das System (52) umfasst:

eine Netzwerkschnittstelle zum Verbinden des Managementsystems (52) mit einem Netzwerk (18), welches eine Vielzahl von Netzwerkverbindungspunkten (24) bereitstellt, über welche eine Clientmaschine unter Benutzung der Verbindungsanwendung (26) sich mit dem Netzwerk verbinden kann; und
eine Server-Maschine (35), die mit dem Netzwerk (18) verbunden ist, wobei die Server-Maschine (35) jedem der Verbindungspunkte (24) eine Vielzahl von Auswahlkriterien zuweist, wobei jedes Auswahlkriterium ein assoziiertes Auswahlgewicht trägt und die Verbindungspunkte in einer priorisierten Reihenfolge in einer Prioritätsliste angeordnet sind, welche durch die Verbindungsanwendung (26) benutzt wird, um sich mit einem beliebigen der Verbindungspunkte (24) zu verbinden, wobei die priorisierte Reihenfolge auf den Auswahlkriterien und assoziierten Auswahlgewichten basiert,
**dadurch gekennzeichnet, dass**
die Verbindungspunkte (24) in der Prioritätsliste diversifiziert sind, so dass die Verbindungspunkte (24) von einer Vielzahl von Dienstanbietern einem Nutzer bereitgestellt werden.

**17.** System gemäß Anspruch 16, wobei eine Gewichtsverzerrung mit jedem Auswahlgewicht assoziiert wird, wobei die Gewichtsverzerrung die Priorität der Verbindungspunkte beeinflusst.

**18.** System gemäß Anspruch 17, wobei die Auswahlgewichte normalisiert sind.

**19.** System gemäß Anspruch 17, wobei jedes Gewicht mit seiner assoziierten Verzerrung multipliziert wird und die Summe der resultierenden verzerrten Gewichte einen Präferenzindikator definiert, der die Reihenfolge jedes Verbindungspunktes (24) in der Prioritätsliste bestimmt.

**20.** System gemäß Anspruch 16, wobei die Auswahlkriterien ausgewählt sind aus der Gruppe umfassend den Preis, die Qualität, Geschwindigkeit, Gewinnmarge und mit dem Verbindungspunkt (24) assoziierte Servicezusage.

**21.** System gemäß Anspruch 16, umfassend einen Webserver, wobei die priorisierte Liste in einer Datei eines Clients gespeichert ist, welche auf dem Webserver publiziert wird, zum Herunterladen durch die Verbindungsanwendung (26).

**22.** System gemäß Anspruch 16, wobei Netzwerkverbindungs-Leistungsdaten gesammelt ist und die Reihenfolge in der Prioritätsliste basierend auf den Netzwerkverbindungs-Leistungsdaten priorisiert ist.

**23.** System gemäß Anspruch 16, wobei jedes Auswahlkriterium mit einer assoziierten finanziellen Überlegung verknüpft ist.

**24.** Maschinenlesbares Medium, welches eine Sequenz von Instruktionen enthält, welche, wenn sie durch eine Maschine ausgeführt wird, die Maschine veranlasst, das Verfahren gemäß einem der Ansprüche 1-15 auszuführen.

**Revendications**

**1.** Procédé destiné à gérer une application de connexion de réseau (26), le procédé comportant les étapes ci-dessous consistant à :

affecter une pluralité de critères de sélection à chaque point de connexion (24), chaque critère de sélection présentant une pondération de sélection associée ;
agencer les points de connexion (24) selon un ordre hiérarchisé dans une liste de priorités utilisée par l'application de connexion (26) pour se connecter à l'un quelconque des points de connexion (24), l'ordre hiérarchisé étant basé sur les critères de sélection et les pondérations de sélection associées ; et
rendre la liste de priorités disponible en vue d'une utilisation par l'application de connexion (26) ;
**caractérisé par** l'étape ci-dessous consistant à :

diversifier les points de connexion (24) dans la liste de priorités, de sorte que des points de connexion (24) provenant d'une pluralité de fournisseurs de services sont fournis à un utilisateur.

**2.** Procédé selon la revendication 1, comportant l'étape consistant à associer une erreur systématique de pondération à chaque pondération de sélection, l'erreur systématique de pondération influençant la priorité du point de connexion (24).

3. Procédé selon la revendication 2, comportant l'étape consistant à normaliser les pondérations de sélection.

4. Procédé selon la revendication 2, comportant les étapes ci-après consistant à : multiplier chaque pondération par son erreur systématique associée ; et obtenir la somme des pondérations systématiquement erronées résultantes, en vue de définir un indicateur de préférence lequel détermine l'ordre de chaque point de connexion (24) dans la liste de priorités.

5. Procédé selon la revendication 1, dans lequel les critères de sélection sont sélectionnés dans le groupe comportant : le prix, les données de performances de connexion de réseau, la marge bénéficiaire, l'engagement de fournisseur de service associé au point de connexion, une erreur de l'utilisateur, une erreur logicielle, une erreur matérielle, et une erreur de réseau.

6. Procédé selon la revendication 5, dans lequel les données de performances de connexion de réseau comportent l'un des éléments parmi le débit et la vitesse de connexion.

7. Procédé selon la revendication 5, dans lequel le critère de prix est un rapport entre le prix du point de connexion particulier et le prix de tous les points de connexion dans un plan de tarification particulier.

8. Procédé selon la revendication 5, dans lequel les données de performances de connexion de réseau comprennent des critères de qualité de connexion.

9. Procédé selon la revendication 5, dans lequel les données de performances de connexion de réseau comportent des critères de vitesse définis comme le rapport entre une vitesse du point de connexion associé et une vitesse de tous les points de connexion.

10. Procédé selon la revendication 5, dans lequel le critère de marge bénéficiaire est défini comme un rapport entre la marge disponible sur le point de connexion associé (24) et une marge disponible sur tous les points de connexion (24) dans un plan de tarification particulier.

11. Procédé selon la revendication 5, dans lequel l'engagement de fournisseur de service est défini comme un pourcentage de l'engagement restant sur une période par rapport à tous les autres engagements sur la période.

12. Procédé selon la revendication 1, dans lequel la pondération de sélection de fournisseurs est un nombre entier affecté par un fournisseur de services d'accès en itinérance.

13. Procédé selon la revendication 1, comprenant en outre les étapes ci-après consistant à : stocker la liste de priorités dans un fichier client ; et publier le fichier client sur un serveur web, en vue du son téléchargement par l'application de connexion (26).

14. Procédé selon la revendication 1, comportant les étapes ci-après consistant à : collecter les données de performances de connexion de réseau ; et modifier l'ordre hiérarchisé dans la liste de priorités sur la base des données de performances de connexion de réseau.

15. Procédé selon la revendication 1, dans lequel au moins un critère de sélection est associé à une considération financière.

16. Système de gestion (52) destiné à gérer une application de connexion, le système (52) comportant :

une interface réseau pour interfacer le système de gestion (52) à un réseau (18) fournissant une pluralité de points de connexion de réseau (24) via lesquels une machine cliente peut se connecter au réseau en utilisant l'application de connexion (26) ; et
une machine serveur (35) connectée au réseau (18), dans lequel la machine serveur (35) affecte une pluralité de critères de sélection à chaque point de connexion (24), chaque critère de sélection présentant une pondération de sélection associée, et les points de connexion sont agencés selon un ordre hiérarchisé dans une liste de priorités utilisée par l'application de connexion (26) pour se connecter à l'un quelconque des points de connexion

22

(24), l'ordre hiérarchisé étant basé sur les critères de sélection et les pondérations de sélection associées ;
**caractérisé en ce que** :

les points de connexion (24) sont diversifiés dans la liste de priorités, de sorte que des points de connexion (24) provenant d'une pluralité de fournisseurs de services sont fournis à un utilisateur.

17. Système selon la revendication 16, dans lequel une erreur systématique de pondération est associée à chaque pondération de sélection, l'erreur systématique de pondération influençant la priorité du point de connexion.

18. Système selon la revendication 17, dans lequel les pondérations de sélection sont normalisées.

19. Système selon la revendication 17, dans lequel chaque pondération est multipliée par son erreur systématique associée, et la somme des pondérations systématiquement erronées résultantes définit un indicateur de préférence lequel détermine l'ordre de chaque point de connexion (24) dans la liste de priorités.

20. Système selon la revendication 16, dans lequel les critères de sélection sont sélectionnés dans le groupe comportant : le prix, la qualité, la vitesse, la marge bénéficiaire, et l'engagement de fournisseur de service associé au point de connexion (24).

21. Système selon la revendication 16, lequel comprend un serveur web, la liste de priorités étant stockée dans un fichier client qui est publié sur le serveur web, en vue de son téléchargement par l'application de connexion (26).

22. Système selon la revendication 16, dans lequel : les données de performances de connexion de réseau sont collectées ; et l'ordre dans la liste de priorités est hiérarchisé sur la base des données de performances de connexion de réseau.

23. Système selon la revendication 16, dans lequel chaque critère de sélection présente une considération financière associée.

24. Support lisible par une machine, intégrant une séquence d'instructions qui, lorsqu'elles sont exécutées par une machine, amènent la machine à mettre en oeuvre le procédé selon l'une quelconque des revendications 1 à 15.

CLIENT
12

SERVER
10

NETWORK
14

CLIENT
12

SERVER
12

FIG. 1

24

ISP
16

20

22

COMPUTER
SYSTEM

MODEM
(OPTIONAL)

24

ISP
16

INTERNET
18

22

24

ISP
16

FIG. 2

FIG. 3

CLIENT MACHINE 20

DIALER 26

SQM AGENT
DATA FILES 28

PHONEBOOK 30

GUI 32

POP 24

NETWORK 14

SERVER MACHINE 35

WEB SERVER 36

LOAD SERVLET 40

REPORT SERVLET 42

DATABASE SERVER 38

SQM PROCESS APPLICATION 44

MAIN SQM THREAD 46

PROCESS THREAD 48

PURGE THREAD 50

RAW SQM TABLE

SQM EXCEPTION TABLE

SQM TABLE

POP PRIORITY LIST

EP 1 636 708 B1

32

62  64  66  68  70

60

Options Bookmarks Help

| Modem | ISDN | PHS | Wireless Broadband | Wired Broadband | Home Broadband |

56

72

Location

YOUR
internet
PASSPORT

Access. Anywhere.

Country: United States of America

State: California

City:

Area Code:                    Clear

74

76

78

34

Phone book

82        84        86

| City | Number | Speed | |
|------|--------|-------|---|
| Pascadero | (650)860 5822 | 56000 | ▲ |
| Portola Valley | (650)288 4727 | 56000 | |
| Portola Valley | (650)353 4727 | 56000 | |
| Redwood City | (650)353 4727 | 56000 | |
| Redwood City | (650)353 4727 | 56000 | |
| Redwood City | (650)423 0155 | 56000 | |
| Redwood City | (650)716 2321 | 56000 | ▼ |

| Dial Properties | 322 0489 | Add Bookmarks |

| Connect | Exit | Help |

80

FIG. 4

26

FIG. 5

FIG. 6

120

```
┌─────────────────────────────────┐
│         GET THE NEXT            │
│    "OPEN" VERSION NUMBER,       │──── 122
│  UPDATE IT TO "PUBLISHING"      │
│   AND CREATE A NEW "OPEN"        │
│           VERSION               │
└─────────────────────────────────┘
              │
              ▼
┌─────────────────────────────────┐
│     GET THE COMPLETE LIST       │──── 124
│           OF POPS               │
└─────────────────────────────────┘
              │
              ▼
┌─────────────────────────────────┐
│     GET THE NEXT CUSTOMIZED     │──── 126
│           PHONEBOOK             │◄───┐
└─────────────────────────────────┘    │
              │                         │
              ▼                         │
┌─────────────────────────────────┐    │
│  APPLY ROAMING SERVICE PROVIDER │──── 128
│   FILTERS TO THE LIST OF POPS   │    │
└─────────────────────────────────┘    │
              │                         │
              ▼                         │
┌─────────────────────────────────┐    │
│   APPLY CUSTOMER FILTERS TO THE │──── 130
│          LIST OF POPS           │    │
└─────────────────────────────────┘    │
              │                         │
              ▼                         │
┌─────────────────────────────────┐    │
│     DETERMINE ROAMING SERVICE   │    │
│  PROVIDER PRICING PLAN CHANGES  │──── 132
│   AND APPLY CUSTOMER PRICING    │    │
│    RULES TO THE LIST OF POPS    │    │
└─────────────────────────────────┘    │
              │                         │
              ▼                         │
┌─────────────────────────────────┐    │
│  CALCULATE THE DIALER_SORT_ORDER│──── 134
│     FOR EACH PROCESS POINT      │    │
└─────────────────────────────────┘    │
              │                         │
              ▼                         │
┌─────────────────────────────────┐    │
│  DETERMINE THE "NEW", "MODIFIED"│──── 136
│     AND "DELETED" POPS          │    │
└─────────────────────────────────┘    │
              │                         │
              ▼                         │
┌─────────────────────────────────┐    │
│   PRINT THE FULL PHONEBOOK TO   │──── 138
│           THE TREE              │    │
└─────────────────────────────────┘    │
              │                         │
              ▼                         │
┌─────────────────────────────────┐    │
│     PRINT THE DELTA FILES TO    │──── 140
│           THE TREE              │    │
└─────────────────────────────────┘    │
              │                         │
              └─────────────────────────┘
```

## FIG. 7

RECORD SET 98

PARSED DATA RECORD

WORKER THREADS 92

PARSERS

SQM DATABASE 84

SqmMessage 96

DISTRIBUTOR 90

MANAGER 94

RAW DATA

FIG. 8

142

144

GET NEXT POP

146

IDENTIFY SELECTION
CRITERIA ASSOCIATED
WITH PARTICULAR POP

148

NORMALIZE SELECTION
CRITERIA

150

OBTAIN SELECTION
WEIGHTS FOR
SELECTION CRITERIA

152

CALCULATE PREFERENCE
INDICATOR FOR
PARTICULAR POP
FOR SELECTION
CRITERIA BASED ON
ASSOCIATED SELECTION
WEIGHTS

154

ALL POPS
DONE?

NO

YES

FIG. 9

FIG. 10

**EP 1 636 708 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20010034796 A1